# EUROPEAN PATENT APPLICATION

(11) **EP 4 129 133 A1**
(43) Date of publication of application: **08.02.2023**
(21) Application number: 20934844.0
(22) Date of filing: 22.09.2020
(51) Int. Cl.: A47L 5/24, A47L 9/10

(54) **HANDHELD VACUUM CLEANER**

(30) Priority: 07.05.2020 CN 202010378202; 07.05.2020 CN 202020733227 U; 07.05.2020 CN 202020733276 U; 07.05.2020 CN 202020734026 U; 07.05.2020 CN 202020733325 U; 07.05.2020 CN 202020734027 U; 07.05.2020 CN 202020733228 U
(71) Applicant: Dreame Innovation Technology (Suzhou) Co., Ltd., Suzhou, Jiangsu 215104 (CN)
(72) Inventor: JIANG, Ce, Suzhou, Jiangsu 215104 (CN); SHI, Lin, Suzhou, Jiangsu 215104 (CN); GAO, Zhao, Suzhou, Jiangsu 215104 (CN)
(74) Representative: dompatent von Kreisler Selting Werner - Partnerschaft von Patent- und Rechtsanwälten mbB
(86) International application number: PCT/CN2020/116769
(87) International publication number: WO 2021/223355

(57) **Abstract**

A handheld vacuum cleaner, comprising: a suctioning unit (10), which is provided with an air outlet end; a dust-gas separation unit (20), which is separably connected to one end of the suctioning unit (10) and coaxially arranged with the suctioning unit (10); a handle (30), which is connected to the other end of the suctioning unit (10) and coaxially arranged with the suctioning unit (10), the interior of the handle (30) being hollow, so that a hollow cavity is formed; a power supply unit (50), which is detachably provided in the hollow cavity of the handle (30); and an outflow air filtering unit (40), which is separably provided on the outer side of the suctioning unit (10) in the axial direction of the handle (30), wherein the outflow air filtering unit (40) is arranged at the air outlet end and is coaxial with the suctioning unit (10). The handheld vacuum cleaner simplifies operation steps of dust removal, and improves the user experience; a filtering effect on the air outlet end is improved; the effect of endurance of the power supply unit (50) on use of the handheld vacuum cleaner by a user is reduced, and the holding effect of the handheld vacuum cleaner by the user during use is improved.

## Description

### TECHNICAL FIELD

The present application relates to a technical field of a cleaning device, in particular to a handheld vacuum cleaner.

### BACKGROUND

Handheld vacuum cleaners are usually powered by their own batteries. Handheld vacuum cleaners are small in size, and very convenient to carry and use, which is a household cleaning product between ordinary household vacuum cleaners and portable vacuum cleaners. More and more Chinese households are using handheld vacuum cleaners. The existing handheld vacuum cleaners have the following defects: 1) no air outlet HEPA is provided, which cannot effectively filter the gas discharged from an air outlet end; 2) disassembly and assembly of a dust cup is cumbersome and error-prone, and the user needs to spend a lot of effort to separate the dust cup from a suction unit with a built-in fan. In the process of pouring dust, the user needs to hold the dust cup with one hand, and lift the dust cup cover with the other hand. Hands are easily contaminated with a lot of dust, which is very inconvenient to use; 3) after the battery is installed, it cannot be taken out from the suction unit. In this way, when the battery is exhausted, the handheld vacuum cleaner can no longer continue the cleaning operation, and can only continue to work after the battery is fully charged, thus limiting the user's use; and 4) a handle of the handheld vacuum cleaner also has a problem of poor holding effect.

Therefore, it is necessary to study a handheld vacuum cleaner.

### SUMMARY

In view of the deficiencies in the above technologies, the present application provides a handheld vacuum cleaner, which can simplify the operation steps of cleaning dust and improve the user experience; improve the filtering effect on the air outlet; and reduce the influence of the battery life of the power supply unit on the user's use, and improve the user's holding effect when using.

In order to achieve the above object, the present disclosure adopts the following technical solution: a handheld vacuum cleaner, including: a suction unit provided with an air outlet end; a dust-gas separation unit detachably connected to one end of the suction unit, the dust-gas separation unit and the suction unit being coaxially disposed; a handle connected to another end of the suction unit, the handle and the suction unit being coaxially disposed, and an interior of the handle being hollow so as to form a hollow cavity; a power supply unit detachably disposed in the hollow cavity of the handle; and an air outlet filter unit detachably disposed on an outside of the suction unit along an axial direction of the handle; wherein the air outlet filter unit is disposed at the air outlet end and is disposed coaxially with the suction unit.

Preferably, the suction unit includes an internally hollow outer shell, the outer shell is formed with a first cylindrical section and a second cylindrical section located adjacent to the first cylindrical section in an axial direction of the outer shell; wherein an outer diameter of the second cylindrical section is smaller than an outer diameter of the first cylindrical section, and an outer diameter of the handle is smaller than the outer diameter of the second cylindrical section, so that the air outlet filter unit can be sleeved on the second cylindrical section from a handle side and along the axial direction of the handle; and the second cylindrical section is provided with the air outlet end; wherein a first shoulder is formed at a connection between the first cylindrical section and the second cylindrical section, and a second shoulder is formed at a connection between the second cylindrical section and the handle; and wherein a circumferential wall surface of the second cylindrical section is provided with a plurality of first air outlet holes which extend through the circumferential wall surface inside and outside, so as to form the air outlet end capable of radially discharging air.

Preferably, the air outlet filter unit includes an air outlet HEPA sleeved on the second cylindrical section and a HEPA protective shell covered on an outer periphery of the air outlet HEPA; wherein the HEPA protective shell is detachably connected with the outer shell to form a circumferential annular space adapted to accommodate the air outlet HEPA; wherein the HEPA protective shell is also provided with second air outlet holes corresponding to the first air outlet holes; wherein the first air outlet holes and the second air outlet holes are located on an inner side and an outer side of the air outlet HEPA, respectively.

Preferably, the power supply unit is detachably disposed in the handle along the axial direction of the handle, the handle includes an internally hollow handle body, the handle body is provided with a connection port which is configured to put the power supply unit into the handle body or take the power supply unit out from the handle body.

Preferably, the power supply unit includes a battery pack located in a hollow cavity of the handle body after installation, an end cup connected with the battery pack and detachably connected with the handle body, and a charging electrode disposed on the battery pack; wherein the end cap is located at the connection port, and the end cap and the handle body form a complete cylindrical body.

Preferably, the end cap is provided with a first connection structure, the handle body is provided with a second connection structure, the end cap is detachably connected to the handle body by an arrangement between the first connection structure and the second connection structure.

Preferably, the dust-gas separation unit includes a dust cup in communication with the suction unit, and a dust cup cover pivotally connected to the dust cup for opening and closing the dust cup; a push button chute structure is disposed between the dust-gas separation unit and the suction unit, the push button chute structure is configured so that the dust cup is slidably connected to the suction unit in an axial direction of the dust cup, thereby the dust cup cover and the dust cup, and the dust cup and the suction unit are unlocked synchronously.

Preferably, a cross-sectional shape of the handle on a plane, which is perpendicular to the axial direction of the handle, is set in an arc racetrack shape, the arc racetrack shape includes a pair of arc edges and a pair of straight edges which are enclosed to form a closed circle, and the pair of arc edges are symmetrically disposed on opposite sides of the pair of straight edges; wherein a radius of the arc edge is r, and a length of the straight edge is 1, where r>l.

Preferably, a side wall of the handle is provided with a button and a through hole; wherein the arc racetrack shape has a long axis and a short axis, the long axis forms a long axis region of the handle, the short axis forms a short axis region of the handle, the button is disposed on one side of the long axis area, and the through hole is located on another side of the long axis area.

Preferably, a sum of lengths of the suction unit and the dust-gas separation unit in the axial direction is a length of a body of the handheld vacuum cleaner; wherein a ratio of the length of the body to a length of the handle ranges from 1.4 to 1.6.

Compared with the prior art, the present application has the following beneficial effects:

In the handheld vacuum cleaner provided by the present application, the air outlet filter unit is detachably disposed on the outside of the suction unit along the axial direction of the handle, which can improve the filtering effect on the air outlet end, and the air outlet filter unit has the advantage of convenient disassembly and assembly. Furthermore, the push button chute structure enables the dust cup to be slidably connected to the suction unit in the axial direction of the dust cup, so that the dust cup cover and the dust cup, and the dust cup and the suction unit are unlocked synchronously. When the dust is dumped, the user only needs to operate the push button and twist to push the dust-air separation unit away from the suction unit, so that the dust cup cover can be pivoted and the dust cup can be opened, which simplifies the operation steps of cleaning dust and improves the user experience. Furthermore, by detachably connecting the power supply unit and the handle, the influence of the battery life of the power supply unit on the use of the user is reduced, which has the advantage of being convenient to use.

### BRIEF DESCRIPTION OF DRAWINGS

FIG. 1 is a structural perspective view of a handheld vacuum cleaner in the present application;
FIG. 2 is a structural exploded schematic view of the handheld vacuum cleaner in FIG. 1;
FIG. 3 is a schematic cross-sectional structure view of the handheld vacuum cleaner in FIG. 1 in one direction;
FIG. 4 is a partial enlarged structural perspective view of a circle A in FIG. 3;
FIG. 5 is a schematic view of a cooperation between a first hook and a block in FIG. 4;
FIG. 6 is an assembly schematic view of an air outlet filter unit and a suction unit in the present application;
FIG. 7 is a partial enlarged structure schematic view of a circle B in FIG. 6;
FIG. 8 is a structural perspective view of a HEPA protective shell in FIG. 6;
FIG. 9 is a structural exploded schematic view of a handle in the present application;
FIG. 10 is an exploded schematic view of a power supply unit in the present application;
FIG. 11 is a cross-sectional structure schematic view of a handle body in the present application;
FIG. 12 is a schematic exploded structure view of an end cap in the present application;
FIG. 13 is a schematic cross-sectional structure view of the end cap in the present application; and
FIG. 14 is a schematic structural view of the handheld vacuum cleaner in a direction of a handle end of the present application.

### DETAILED DESCRIPTION

The present application will be further described in detail below with reference to the accompanying drawings, so that those skilled in the art can implement it with reference to the description. If there are descriptions involving "first", "second", etc., in the embodiments of the present application, the description of "first", "second", etc., are only used for the purpose of description, and should not be understood as indicating or implying their relative importance or implying the number of technical features indicated. Thus, a feature delimited with "first", "second" may expressly or implicitly include at least one of that feature.

In the description of the present application, it should also be noted that, unless there are more explicit definitions and limitations, the terms "disposed" and "connected" should be understood in a broader sense. For example, the term "connected" may be a fixed connection, a detachable connection, or an integral connection; a mechanical connection or an electrical connection; a direct connection, or an indirect connection through an intermediate medium, or a communication of two elements. For those of ordinary skill in the art, the specific meanings of the above terms in the present disclosure can be understood in specific situations.

In addition, if the meaning of "and/or" appears in the present application, it includes three concurrent solutions. Taking "A and/or B" as an example, it includes a solution A, or a solution B, or a solution that satisfies both the solution A and the solution B. In addition, the technical solutions between the various embodiments can be combined with each other, but must be based on the realization by those of ordinary skill in the art. When a combination of technical solutions contradicts each other or cannot be realized, it shall be considered that such combination of technical solutions does not exist, and is not within the protection scope claimed in the present application.

At present, a handheld vacuum cleaner is a kind of cleaning device commonly used in households or public places. The working principle of the handheld vacuum cleaner is that air negative pressure is generated in a sealed shell by a fan, and under the action of this pressure difference, dusty air is inhaled. The existing handheld vacuum cleaner has the following defects: 1) because no air outlet HEPA is provided, it cannot effectively filter the gas discharged from an air outlet end; 2) disassembly and assembly of a dust cup is cumbersome and error-prone, and the user needs to spend a lot of effort to separate the dust cup from a suction unit with a built-in fan. In the process of pouring dust, the user needs to hold the dust cup with one hand, and lift the dust cup cover with the other hand. Hands are easily contaminated with a lot of dust, which is very inconvenient to use; 3) after the battery is installed, it cannot be taken out from the suction unit. In this way, when the battery is exhausted, the handheld vacuum cleaner can no longer continue the cleaning operation, and can only continue to work after the battery is fully charged, thus limiting the user's use; and 4) a handle of the handheld vacuum cleaner also has a problem of poor holding effect.

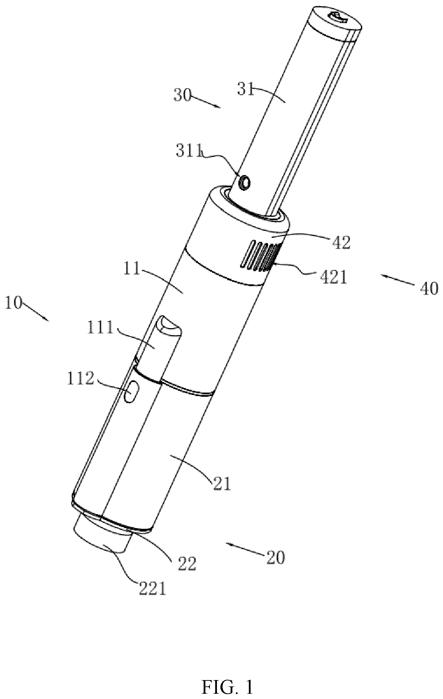

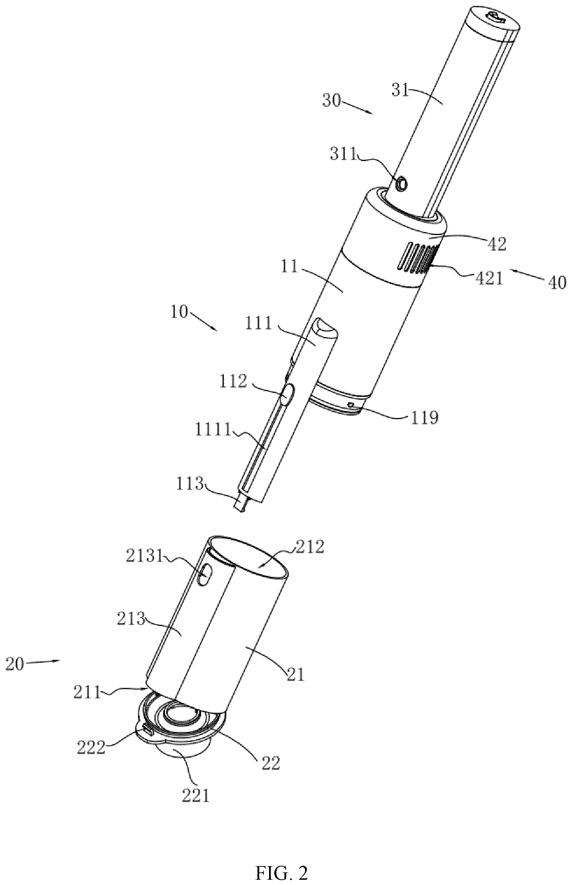

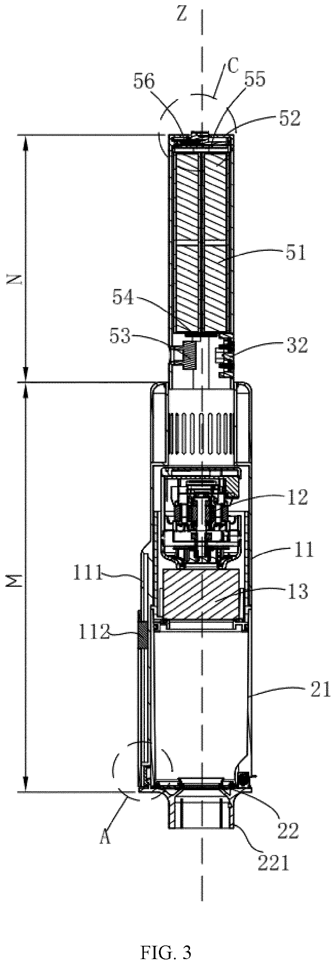

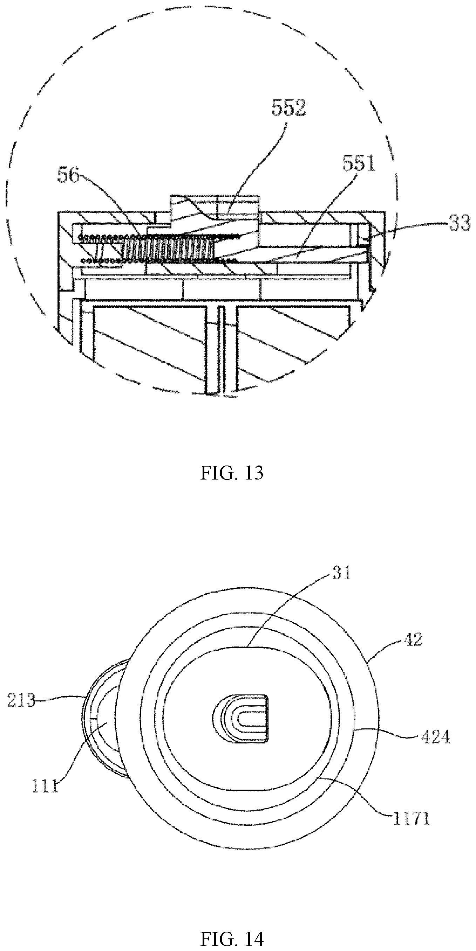

In order to solve the above technical problems, the present application proposes a handheld vacuum cleaner. Referring to FIG. 1 to FIG. 3, in which FIG. 1 is a schematic structural view of the handheld vacuum cleaner in the present application, FIG. 2 is a structural exploded schematic view of the handheld vacuum cleaner in FIG. 1, and FIG. 3 is a schematic cross-sectional structure view of the handheld vacuum cleaner in FIG. 1 in one direction, in the present application, the handheld vacuum cleaner may include a suction unit 10, a dust-gas separation unit 20, a handle 30 and an air outlet filter unit 40 which are disposed coaxially. Please continue to refer to FIG. 1 to FIG. 3 in conjunction with FIG. 14, in which FIG. 14 is a schematic structural view of the handheld vacuum cleaner in a direction of a handle end of the present application, the phrase "disposed coaxially" in the present application means that the suction unit 10 has a first central axis disposed along a front-rear direction, the dust-gas separation unit 20 has a second central axis disposed along the front-rear direction, and the handle 30 has a third central axis disposed in the front-rear direction. The first central axis, the second central axis and the third central axis are disposed collinearly, wherein the common axis is the axis Z. That is, the dust-gas separation unit 20, the suction unit 10, and the handle 30 are disposed forwardly and backwardly in a horizontal direction and are located on the same axis.

Specifically, along an axial direction of the suction unit 10, the dust-gas separation unit 20 and the handle 30 are located at opposite ends of the suction unit 10, respectively. The dust-gas separation unit 20 is disposed at one end of the suction unit 10 and extends forwardly beyond a front end of the suction unit 10, and the handle 30 is disposed at the other end of the suction unit 10 and extends backwardly beyond a rear end of the suction unit 10. The suction unit 10 is adapted to generate negative pressure so as to suck up dust and gas. The suction unit 10 includes a fan 12. The handle 30 extends through an air outlet filter unit 40, so that the air outlet filter unit 40 can be disposed at an air outlet end of the suction unit 10. The air outlet filter unit 40 is communicated with the dust-gas separation unit 20 and the suction unit 10, so that the dust and gas can pass through the dust-gas separation unit 20 and the suction unit 10 in turn after being sucked by the fan 12 of the suction unit 10; and finally, the dust is discharged after being filtered by the air outlet filter unit 40.

Furthermore, an air inlet HEPA 13 is also provided at an air inlet of the fan 12. The air outlet filter unit 40 is disposed downstream of an air outlet path of the fan 12. The air inlet HEPA 13 is disposed inside the suction unit 10. The air outlet filter unit 40 is disposed outside the suction unit 10 and at the air outlet end of the suction unit 10. Among them, the air inlet HEPA 13 is mainly adapted to filter large foreign objects in the dust and gas, such as particles, paper scraps or hair, etc., and block the foreign objects in the dust-gas separation unit 20. The air outlet filter unit 40 can effectively perform secondary purification on the air discharged from the fan 12, and can filter most of the fine particles in the air discharged by the fan 12, so that the air passing through the vacuum cleaner can be purified and discharged, thereby reducing secondary pollution.

In one embodiment, the dust-gas separation unit 20 may include a dust cup 21 and a dust cup cover 22. The dust cup cover 22 is pivotally connected to a mouth of the dust cup 21. The dust cup cover 22 is provided with an air intake pipe 221. The air intake pipe 221 is adapted to form a suction port of the handheld vacuum cleaner. The dust cup 21 is hollow inside and open at its ends to form a first port 211 at the front end and a second port 212 at the rear end. The first port 211 is the mouth of the dust cup 21. The dust cup cover 22 is pivotally connected to the first port 211 to open and close the first port 211. The second port 212 is adapted to cooperate with the suction unit 10 to form a communicating suction circuit.

In one embodiment, a sealing ring may also be provided between the dust cup cover 22 and the first port 211 of the dust cup 21, and a sealing ring may also be provided between the second port 212 of the dust cup 21 and the suction unit 10 to improve the air tightness of the dust-gas separation unit 20.

Furthermore, considering the convenience of users when dumping the dust, continue referring to FIG. 2 and FIG. 3, in one embodiment, the suction unit 10 is detachably connected to the dust-gas separation unit 20. The suction unit 10 is slidably connected to the dust-gas separation unit 20 in its own axial direction. Among which, the suction unit 10 may include an outer shell 11 which is hollow inside and is detachably connected to the second port 212 of the dust cup 21. A plurality of bumps 119 distributed along a circumferential direction of the second port 212 are formed at a place where the outer shell 11 and the second port 212 are mated, and are used for engaging with the second port 212. The fan 12 is disposed in a hollow cavity of the outer shell 11. A push button chute structure is disposed between the outer shell 11 and the dust cup 21. The push button chute structure is configured so that the dust cup 21 can be slidably connected with the suction unit 10 in its own axial direction. As a result, the dust cup cover 22 and the dust cup 21, and the dust cup 21 and the suction unit 10 are unlocked synchronously. Of course, the push button chute structure is also adapted to achieve synchronous locking between the dust cup cover 22 and the dust cup 21, and between the dust cup 21 and the outer shell 11. When the push button chute structure is in a locked state, the dust cup cover 22 cannot open the first port 211. At the same time, the dust cup 21 cannot be separated from the outer shell 11. In this state, the dust-gas separation unit 20 cannot perform the dust dumping operation. When the push button chute structure is in an unlocked state, the dust cup cover 22 can open the first port 211, and the dust-gas separation unit 10 can slide relative to the suction unit 20.

In one embodiment, the push button chute structure includes a sliding substructure capable of sliding the dust cup 21 along its own axial direction and a hook substructure connecting the dust cup cover 22 and the outer shell 11. The sliding substructure includes a raised portion 213 formed on an outer circumferential wall of the dust cup 21 and extending along its axial direction, an arc-shaped guide bar 111 formed on the outer shell 11 and extending into the raised portion 213, and a push button 112 slidably disposed on the guide bare 111. The guide bare 111 is provided with a chute 1111 extending along the axial direction of the dust cup 21 and engaging with the push button 112. The push button 112 is slidable in the chute 1111. The raised portion 213 is hollow inside and open at opposite ends to form an accommodating cavity therethrough. A front end of the raised portion 213 is flush with the first port 211. The accommodating cavity of the raised portion 213 and the hollow cavity of the dust cup 21 are independent of each other. A push button hole 2131 for accommodating the push button 112 is provided on the raised portion 213. The push button hole 2131 is configured so that when a forward or backward pushing force is applied to the push button 112, the push button 112 can drive the raised portion 213, thereby driving the dust cup 21 to slide relative to the outer shell 11. Specifically, the push button 112 can drive the dust cup 21 to move forwardly or backwardly along its axial direction, so as to realize the unlocking or locking of the dust cup 21 and the outer shell 11.

In one embodiment, the raised portion 213 is provided with a raised button structure (not shown). When the button is pressed and unlocked, the raised portion 213 and the guide bare 111 can slide relative to each other.

Further, the hook substructure includes a first hook 113 pivotally connected to the front end surface of the guide bare 111 and located in the raised portion 213, and a second hook 222 fixed on the dust cup cover 22. The second hook 222 is capable of extending into the accommodating cavity of the raised portion 213 and then engages with the first hook 113. The guide bare 111 and the second hook 222 can extend into the accommodating cavity from the rear end and the front end, respectively.

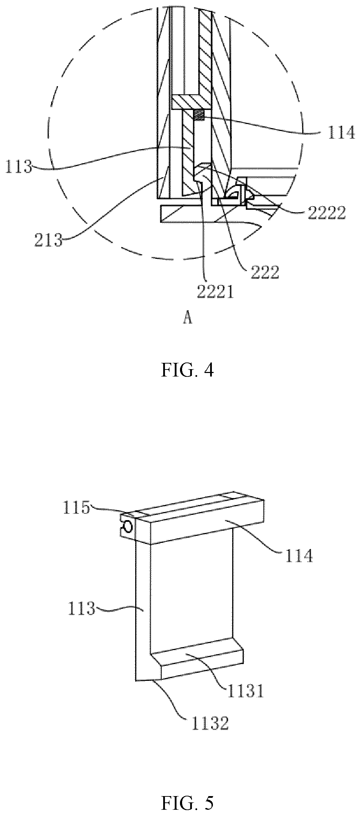

Specifically, referring to FIG. 4 and FIG. 5 in conjunction with FIG. 2, in which FIG. 4 is a partial enlarged structural perspective view of the circle A in FIG. 3, and FIG. 5 is a schematic view of a cooperation between the first hook and the block in FIG. 4, the first hook 113 is pivotally connected to the front end surface of the guide bare 111 through a pivot base 115. The pivot base 115 is fixed on the front end surface of the guide bare 111. A torsion spring capable of restoring the first hook 113 is also sleeved on a pivot shaft between the pivot base 115 and the first hook 113. A hook portion of the first hook 113 is provided with a first guide surface 1131 which facilitates the disengagement of the second hook 222 when unlocking, and a second guide surface 1132 which facilitates the insertion of the second hook 222 during locking. An acute included angle is formed between the first guide surface 1131 and the horizontal plane, and an acute included angle is formed between the second guide surface 1132 and the horizontal plane. A value range of the included angle is 22°to 68°, which can be 25°, 30°, 35°, 40°, 45°, 50°, 55°, 60° and 65°, so that the first hook 113 and the second hook 222 are better disengaged or engaged. The second hook 222 is provided with a third guide surface 2221 and a fourth guide surface 2222. The third guide surface 2221 is mated with the first guide surface 1131. The fourth guide surface 2222 is mated with the second guide surface 1132.

Furthermore, a block 114 is fixed on the front end surface of the guide bare 111. The block 114 abuts against a side surface of the first hook 113 on which the hook portion is formed. The block 114 is adapted to define an engaging position of the first hook 113, so that the first hook 113 and the second hook 222 can be smoothly hooked together.

The push button chute structure has been fully described above, and those skilled in the art will understand the following unlocking or locking process:
a. synchronous unlocking process: a forward thrust is applied on the push button 112, and the push button 112 drives the dust cup 21 to move forwardly together. During this process, the dust cup 21 and the outer shell 11 are unlocked. At the same time, since one side of the dust cup cover 22 is pivotally connected with the dust cup 21, and an opposite side is snapped with the outer shell 11, the dust cup cover 22 is bound to move forwardly together with the dust cup 21. When the applied thrust is greater than the elastic torsional restoring force of the torsion spring, the second hook 222 forces the first hook 113 to rotate to a side away from the second hook 222, thereby realizing the unlocking of the dust cup 21 and the dust cup cover 22. As a result, the synchronous unlocking of the dust cup 21 and the dust cup cover 22, and the dust cup 21 and the outer shell 11 is realized.
b. synchronous locking process: a backward thrust is applied on the dust cup cover 22 to make the dust cup cover 22 abut against the first port 211, so that the second hook 222 of the dust cup cover 22 extends into the raised portion 213, and then engages with the first hook 113. During this process, the dust cup 21 is reset to a state of being snapped with the outer shell 11. The push button 112 is also reset to an initial state under the driving of the dust cup 21, so as to realize the synchronous locking of the dust cup 21 and the dust cup cover 22, and the dust cup 21 and the outer shell 11. During the above-mentioned entire movement process, the push button 112 and the dust cup 21 are always kept in a snap-fit state. When the push button 112 moves, the dust cup 21 is driven to move. Similarly, when the dust cup 21 moves, the push button 112 can also be driven to move.

In the above manner, when dumping dust on the handheld vacuum cleaner, the user only needs to operate the push button 112 to push the dust-gas separation unit 20 away from the suction unit 10 to pivot the dust cup cover 22 and open the dust cup 21. Thus, the operation steps of cleaning the dust are simplified, and the user experience is improved.

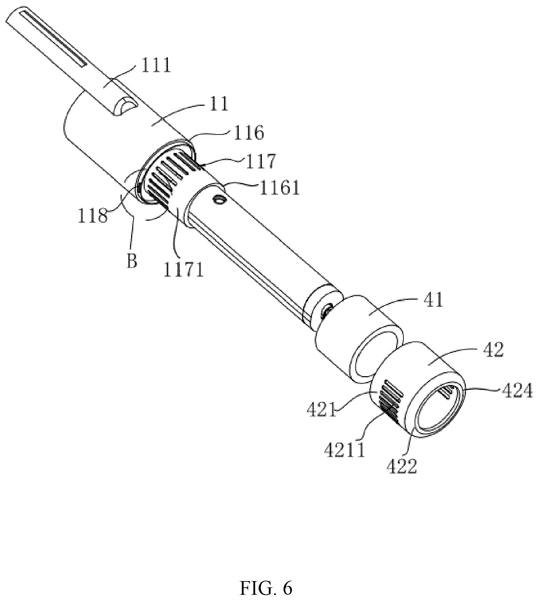

Furthermore, considering that the air outlet filter unit 40 needs to be disassembled from the suction unit 10 for cleaning after a period of use, in order to facilitate disassembly, the air outlet filter unit 40 is detachably disposed outside the suction unit 10 along the axial direction of the handle 30. The air outlet filter unit 40 is disposed adjacent to the handle 30 in the axial direction of the handle 30. The suction unit 10 is provided with an air outlet end. The air outlet filter unit 40 is disposed at the air outlet end and is disposed coaxially with the suction unit 10. The air outlet filter unit 40 is configured to filter the air flow discharged through the air outlet end. Referring to FIG. 6 which is an assembly schematic view of the air outlet filter unit and the suction unit in the present application, the air outlet filter unit 40 may include an air outlet HEPA 41 and a HEPA protective shell 42. The air outlet HEPA 41 is sleeved on the outer circumferential wall of the outer shell 11 and is disposed adjacent to the handle 30. The HEPA protective shell 42 is covered on an outer periphery of the air outlet HEPA 41 and is detachably connected to the outer shell 11 of the suction unit 10 so as to form a circumferential annular space for accommodating the air outlet HEPA 41. Therefore, when the air outlet HEPA 41 needs to be replaced, the air outlet HEPA 41 can be replaced only by removing the HEPA protective shell 42 from the suction unit 10, which has the advantage of convenient disassembly and assembly.

Specifically, the outer shell 11 of the suction unit 10 is formed with a first cylindrical section and a second cylindrical section 1171 adjacent to each other in the axial direction thereof. An outer diameter of the second cylindrical section 1171 is smaller than an outer diameter of the first cylindrical section, and an outer diameter of the handle 30 is smaller than the outer diameter of the second cylindrical section 1171, so that the air outlet filter unit 40 can be sleeved onto the second cylindrical section 1171 from the handle side and along the axial direction of the handle 30. The second cylindrical section 1171 is provided with the air outlet end. It can be understood that a first shoulder 116 is formed at the connection between the first cylindrical section and the second cylindrical section 1171. A second shaft shoulder 1161 is formed at the connection between the second cylindrical section 1171 and the handle 30. The second cylindrical section 1171 is sleeved with the air outlet HEPA 41. The shaft shoulder 116 is adapted to axially limit the air outlet HEPA 41. A circumferential wall surface of the second cylindrical section 1171 is provided with a plurality of first air outlet holes 117 extending through the circumferential wall surface inside and outside so as to form the air outlet end capable of radially discharging air. The first air outlet holes 117 are disposed along a radial direction of the suction unit 10, so that the handheld vacuum cleaner in the present application can discharge air radially. The first air outlet holes 117 are distributed on the circumferential wall surface of the second cylindrical section 1171 in a circular array to achieve the purpose of uniform air outlet.

Furthermore, the HEPA protective shell 42 is generally in a shape of a sleeve, and includes a cylindrical shell 421 enclosing the air outlet HEPA 41, and an annular flange 422 formed at a rear end of the cylindrical shell 421 and extending along a radial direction of the cylindrical shell 421. A circular arc chamfer 424 is provided at the connection between the cylindrical shell 421 and the flange 422. The flange 422 is adapted to cover a rear end of the air outlet HEPA 41. A front end of the air outlet HEPA 41 abuts against the shaft shoulder 116. As a result, the air outlet HEPA 41 can be effectively limited to the outer circumference of the second cylindrical section.

Furthermore, the cylindrical shell 421 is provided with a plurality of second air outlet holes 4211. The first air outlet holes 117 and the second air outlet holes 4211 are located on an inner side and an outer side of the air outlet HEPA 41, respectively. The plurality of second air outlet holes 4211 and the plurality of first air outlet holes 117 are disposed corresponding to each other, so as to prevent the air outlet HEPA 41 from affecting the air outlet speed. In appearance, the outer circumferential surface of the cylindrical shell 421 and the outer circumferential surface of the first cylindrical section are located on a same cylindrical surface. An inner diameter of the flange 422 is equal to an outer diameter of the second cylindrical section. The flange 422 is flush with a rear end of the second cylindrical section 1171. Therefore, the HEPA protective shell 42 and the outer shell 11 in the present application form a complete columnar body, which has the advantage of being beautiful and elegant.

Furthermore, the HEPA protective shell 42 and the outer shell 11 of the suction unit 10 can be snap-connected or screwed. When the HEPA protective shell 42 and the outer shell 11 of the suction unit 10 are connected by a snap connection, a first snap connection structure 118 is provided at the shaft shoulder 116. An inner wall of the front end of the HEPA protective shell 42 is provided with a second snap connection structure 423 which cooperates with the first snap connection structure 118. The HEPA protective shell 42 is snap-connected to the outer shell 11 through the cooperation between the second snap connection structure 423 and the first snap connection structure 118.

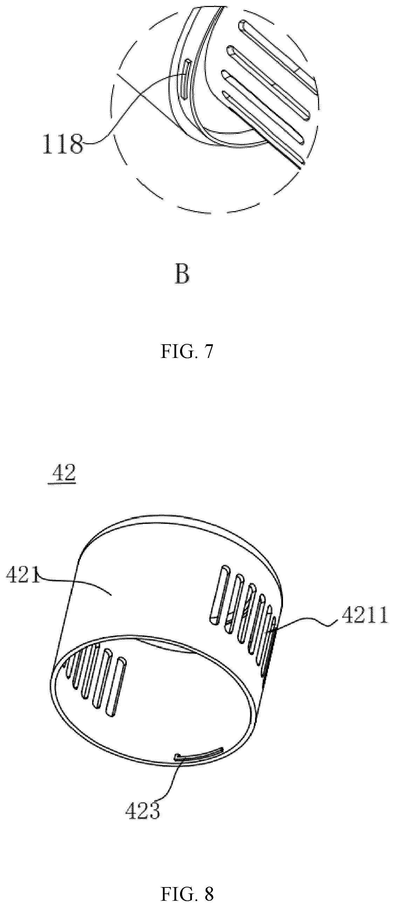

Referring to FIG. 7 and FIG. 8 in conjunction with FIG. 6, in which FIG. 7 is a partial enlarged structure schematic view of the circle B in FIG. 6, and FIG. 8 is a structural perspective view of the HEPA protective shell in FIG. 6, the snapping manner between the HEPA protective shell 42 and the outer shell 11 may be a twist or a buckle. When the HEPA protective shell 42 and the outer shell 11 are connected by the twist, the first snap connection structure 118 is a first rib in a straight shape, and the second snap connection structure 423 is a second rib in an "L" shape which is mated with the first rib. When the HEPA protective shell 42 is connected with the outer shell 11 through the buckle, the first snap connection structure 118 is a bucking opening, and the second snap connection structure 423 is a buckle body.

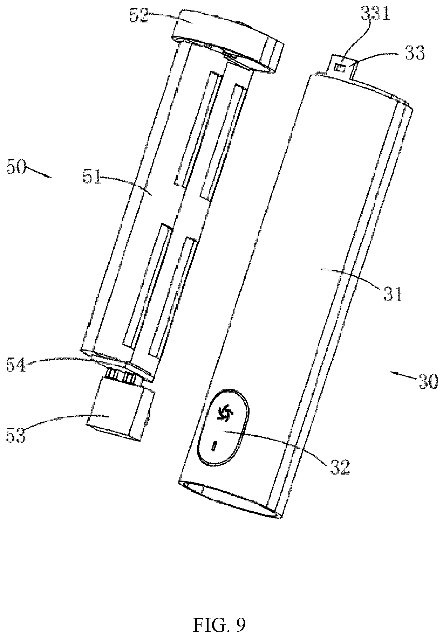

Furthermore, referring to FIG. 9 in conjunction with FIG. 1 and FIG. 2, in which FIG. 9 is a structural exploded schematic view of the handle in the present application, an interior of the handle 30 is hollow, and the handle 30 is disposed at one end of the suction unit 10 away from the dust-gas separation unit 20. Specifically, the handle 30 may include a handle body 31 with a hollow interior and openings at two ends. A front opening of the handle body 31 is fixedly connected to and communicated with the rear end of the outer shell 11 of the suction unit 10. The handle body 31 is provided with a button 32 for opening and closing the fan 12. The button 32 is provided near the rear end of the outer shell 11.

Furthermore, considering the portability of the handheld vacuum cleaner, referring to FIG. 9, in one embodiment, the handheld vacuum cleaner may further include a power supply unit 50. The power supply unit 50 is detachably disposed in the hollow cavity of the handle 30 for supplying power to the fan 12 (see FIG. 3) inside the suction unit 10. As a result, the user can use wirelessly when using it. Besides, because the power supply unit 50 is detachably connected to the handle 30, the user can replace the power supply unit 50 when the power supply unit 50 needs to be charged, thereby reducing the problem of affecting the user's use due to the battery life of the power supply unit 50.

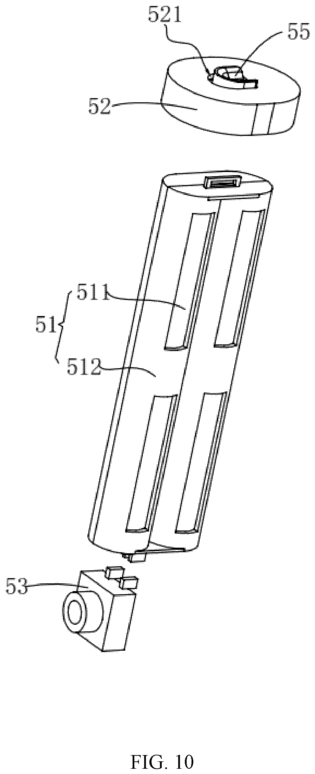

In one embodiment, referring to FIG. 9 and FIG. 10, in which FIG. 10 is an exploded schematic view of the power supply unit in the present application, the power supply unit 50 can be detachably provided in the handle 30 along the axial direction of the handle 30. After the power supply unit 50 is installed to the handle 30, a rear end of the power supply unit 50 is exposed to an outside of the handle 30 and forms a complete column with the handle 30. The handle body 31 is provided with a connection port. The connection port is configured to put the power supply unit 50 into the handle body 31 or take it out from the handle body 31. In the present application, the above-mentioned connection port is a rear end opening of the handle body 31. In the present application, the power supply unit 50 can be regarded as an independent whole. That is, the power supply unit 50 can be taken out from the hollow cavity of the handle body 31 as a whole, and can also be installed into the hollow cavity of the handle body 31 as a whole. Thereby, two charging modes of the power supply unit 50 are realized, which are internal charging and external charging, respectively. The internal charging refers to a charging method when the power supply unit 50 is installed on the handle body 31. The external charging refers to a charging method after the power supply unit 50 is taken out from the handle body 31.

Specifically, the power supply unit 50 may include a battery pack 51 located in the hollow cavity of the handle body 31 after installation, an end cap 52 disposed at a rear end of the battery pack 51 and detachably connected to the rear end of the handle body 31, a circuit board 54 disposed at a front end of the battery pack 51, and a charging electrode 53 detachably provided on the circuit board 54. The end cap 52 is located at the connection port and forms a complete cylindrical body with the handle body 31. The charging electrode 53 is disposed on the battery pack 51 through the circuit board 54. The battery pack 51 is electrically connected to the circuit board 54. The charging electrode 53 and the circuit board 54 are electrically connected. The battery pack 51 includes a plurality of batteries 511 and a bracket 512 for wrapping the plurality of batteries 511 as a whole. The bracket 512 is in a hollowed-out shape of a thin shell disposed in two halves. After the power supply unit 50 is installed to the handle body 31, the end cap 52 of the power supply unit 50 forms a rear end cap of the handle 30. Both the circuit board 54 and the charging electrode 53 are located in the hollow cavity of the handle body 31. The handle body 31 is provided with a through hole 311. The through hole 311 is adapted to expose the charging electrode 53 located in the handle body 31 to facilitate charging. In the present application, the power supply unit 50 is installed into the handle 30 to form an electrical connection with the button 32, and the charging electrode 53 is exposed to the outside through the through hole 311 to facilitate the internal charging of the power supply unit 50. After the power supply unit 50 is taken out from the handle body 31, the power supply unit 50 can perform the external charging of the battery pack 51 through the self-contained charging electrode 53. Therefore, the handheld vacuum cleaner in the present application can have the characteristics of replaceable power supply unit 50, and the internal charging and the external charging, which greatly avoids the problem of affecting normal use due to battery life.

Furthermore, in order to realize the detachable connection between the power supply unit 50 and an arm 30, the end cap 52 is provided with a first connection structure. The rear end of the handle body 31 is provided with a second connection structure. The end cap 52 is detachably connected to the rear end of the handle body 31 through an arrangement between the first connection structure and the second connection structure.

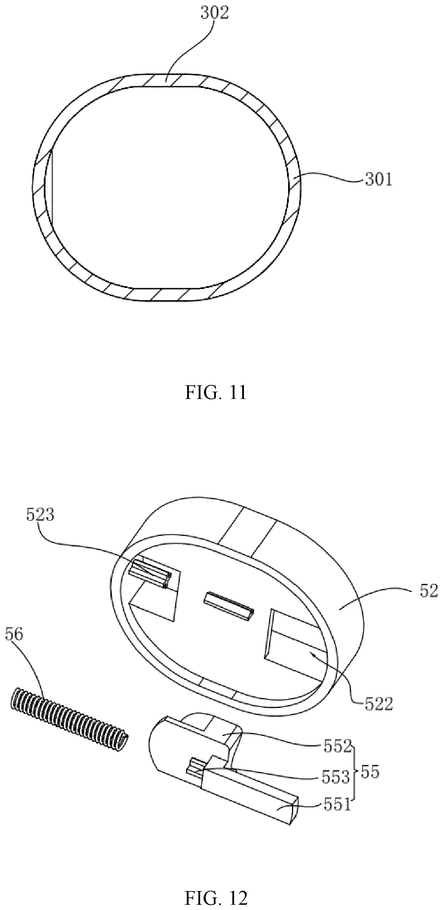

Specifically, referring to FIG. 12 and FIG. 13, in which FIG. 12 is a schematic exploded structure view of the end cap in the present application, and FIG. 13 is a schematic cross-sectional structure view of the end cap in the present application, the first connection structure includes a locking member 55 and a compression spring 56 disposed on the end cap 52. The compression spring 56 is adapted to provide an elastic restoring force to the locking member 55. The locking member 55 is telescopically disposed on the end cap 52 through the compression spring 56. An interior of the end cap 52 is hollow so as to form an installation cavity for accommodating the locking member 55 and the compression spring 56. The locking member 55 includes a horizontally disposed locking plate 551 and a push block 552 formed above the locking plate 551. A first through opening 521 for exposing the push block 552 is provided on a rear end surface of the end cap 52. The push block 552 is slidable in the first through opening 521.

Furthermore, a first limiting post 523 is fixed on a cavity wall of the installation cavity of the end cap 52. A second limiting post 553 is also formed on the locking member 55, which is fixedly connected to the locking plate 551 and located below the push block 552. The first limiting post 523 and the second limiting post 553 are disposed in line. One end of the compression spring 56 is sleeved on the first limiting post 523, and the other end of the compression spring 56 abuts against the second limiting post 553.

Referring to FIG. 3 and FIG. 13, the second connection structure includes a protrusion 33 fixed at the rear end opening of the handle body 31 and extending backwardly into the installation cavity of the end cap 52. The front end surface of the end cap 52 is provided with a second through opening 522 that enables the protrusion 33 to extend into the installation cavity of the end cap 52. The protrusion 33 is provided with an insertion hole 331, and the insertion hole 331 is used for engaging with an end of the locking plate 551. The locking plate 551 is disposed in line with the insertion hole 331. The locking plate 551 can be inserted into the insertion hole 331.

It can be understood that the end cap 52 and the battery pack 51 may be fixedly connected or may be detachably connected. Preferably, a detachable connection method is adopted between the end cap 52 and the battery pack 51, which has the advantage of convenient disassembly and assembly.

The power supply unit 50 has been fully described above, and those skilled in the art will understand the following operations:

When disassembling the power supply unit 50, referring to FIG. 3 in conjunction with FIG. 12, and the push block 552 is pushed along a transverse direction. The above-mentioned transverse direction refers to a direction perpendicular to the axial direction thereof. That is, the push block 552 is pushed in a direction perpendicular to its axial direction, so that the push block 552 slides in the first through opening 521 of the end cap 52, thereby driving the locking plate 551 to exit the insertion hole 331 on the top of the handle body 31. At the same time, a pulling force is exerted on the end cap 52 along its axial direction, so that the power supply unit 50 can be taken out from the handle 30 as a whole.

When installing the power supply unit 50, referring to FIG. 3 in conjunction with FIG. 12, the push block 552 is pushed in a direction perpendicular to its axial direction, so that the locking plate 551 is in a state of being retracted into the end cap 52. At this time, the power supply unit 50 is inserted into the handle 30 as a whole, so that the power supply unit 50 and the button 32 are electrically connected. Meanwhile, the charging electrode 53 is exposed to the outside from the through hole 311. Then, the push block 552 is released, so that the locking plate 551 is inserted into the insertion hole 331 under the action of the compression spring 56, thereby completing the installation of the power supply unit 50.

It can be understood that the present application only exemplarily provides an implementation manner in which the power supply unit 50 is assembled into the interior of the handle 30 along the axial direction of the handle 30. In other embodiments, the power supply unit 50 may also be assembled into the interior of the handle 30 along the radial direction of the handle 30. Those skilled in the art can make adjustments according to the actual situation, which will not be repeated here.

Referring to FIG. 3, considering the gravity center of the handheld vacuum cleaner and the grip feeling during use, a ratio between a body length M and a handle length N is limited. First of all, the length here refers to a distance value in the axial direction. The handle length N refers to an axial distance from the front end to the rear end of the handle 30. The body length M is a sum of a length of the suction unit 10 and a length of the dust-gas separation unit 20 in the axial direction. It should be noted that the axial length of the dust-gas separation unit 20 does not include the axial length of the air intake pipe 221 connected thereto. In the present application, the ratio of the body length M to the handle length N ranges from 1.4 to 1.6, and may be 1.45, 1.50 and 1.55. Therefore, the gravity center of the handheld vacuum cleaner can be more stable, and a better grip feeling can be achieved, which effectively improves the user experience.

Furthermore, referring to FIG. 11 in conjunction with FIG. 3, in which FIG. 11 is a cross-sectional structure schematic view of the handle body in the present application, in order to facilitate the user to hold and enhance the hand feeling, the present application sets the cross-sectional shape of the handle body 31 on a plane perpendicular to its axial direction to an arc racetrack shape.

Specifically, the above-mentioned cross-sectional shape includes a pair of arc edges 301 and a pair of straight edges 302. The pair of straight edges 302 are parallel to each other. The pair of arc edges 301 are symmetrically disposed on opposite sides of the pair of straight edges 302. An arc edge is connected to one end of the pair of straight edges 302, and another arc edge is connected to the other end of the pair of straight edges to form a closed circle. A radius of the arc edge 301 is r, a length of the straight edge 302 is 1, where r>l. Thereby, it is convenient for the user to hold the handle.

Specifically, the arc racetrack shape has a long axis and a short axis. The long axis forms a long axis region of the handle 30. The short axis forms a short axis region of the handle 30. The button 32 is disposed on one side of the long axis area, and the through hole 311 is located on the other side of the long axis area.

In summary, the present application proposes the handheld vacuum cleaner. The handheld vacuum cleaner is provided with the push button chute structure between the dust-gas separation unit and the suction unit, so as to realize the separation of the two and the synchronous opening and closing of the dust cup, thereby simplifying the user's operation steps. Furthermore, in the present application, by arranging the air outlet filter unit at the air outlet end of the suction unit, the filtering effect on the air outlet end can be improved. Furthermore, the present application also reduces the influence of the battery life of the power supply unit on the use of the user by detachably connecting the power supply unit and the handle. Furthermore, in the present application, the handle is set in the arc racetrack shape, and the ratio of the handle length to the body length is set to 1.4 to 1.6, thereby improving the user's holding effect during use, and making the center of the handheld vacuum cleaner more stable.

Although the embodiments of the present application have been disclosed above, they are not limited to the applications listed in the description and the embodiments, and can be applied to various fields suitable for the present application. Additional modifications can readily be implemented by those skilled in the art. Therefore, the application is not limited to the specific details and illustrations shown and described herein without departing from the general concept defined by the claims and the scope of equivalents.

## Claims

1. A handheld vacuum cleaner, comprising:
a suction unit provided with an air outlet end;
a dust-gas separation unit detachably connected to one end of the suction unit, the dust-gas separation unit and the suction unit being coaxially disposed;
a handle connected to another end of the suction unit, the handle and the suction unit being coaxially disposed, and an interior of the handle being hollow so as to form a hollow cavity;
a power supply unit detachably disposed in the hollow cavity of the handle; and
an air outlet filter unit detachably disposed on an outside of the suction unit along an axial direction of the handle;
wherein the air outlet filter unit is disposed at the air outlet end and is disposed coaxially with the suction unit.

2. The handheld vacuum cleaner according to claim 1, wherein
the suction unit comprises an internally hollow outer shell, the outer shell is formed with a first cylindrical section and a second cylindrical section located adjacent to the first cylindrical section in an axial direction of the outer shell; wherein an outer diameter of the second cylindrical section is smaller than an outer diameter of the first cylindrical section, and an outer diameter of the handle is smaller than the outer diameter of the second cylindrical section, so that the air outlet filter unit can be sleeved on the second cylindrical section from a handle side and along the axial direction of the handle; and the second cylindrical section is provided with the air outlet end;
wherein a first shoulder is formed at a connection between the first cylindrical section and the second cylindrical section, and a second shoulder is formed at a connection between the second cylindrical section and the handle; and
wherein a circumferential wall surface of the second cylindrical section is provided with a plurality of first air outlet holes which extend through the circumferential wall surface inside and outside, so as to form the air outlet end capable of radially discharging air.

3. The handheld vacuum cleaner according to claim 2, wherein
the air outlet filter unit comprises an air outlet HEPA sleeved on the second cylindrical section and a HEPA protective shell covered on an outer periphery of the air outlet HEPA; wherein the HEPA protective shell is detachably connected with the outer shell to form a circumferential annular space adapted to accommodate the air outlet HEPA;
wherein the HEPA protective shell is also provided with second air outlet holes corresponding to the first air outlet holes; wherein the first air outlet holes and the second air outlet holes are located on an inner side and an outer side of the air outlet HEPA, respectively.

4. The handheld vacuum cleaner according to claim 1, wherein
the power supply unit is detachably disposed in the handle along the axial direction of the handle, the handle comprises an internally hollow handle body, the handle body is provided with a connection port which is configured to put the power supply unit into the handle body or take the power supply unit out from the handle body.

5. The handheld vacuum cleaner according to claim 4, wherein
the power supply unit comprises a battery pack located in a hollow cavity of the handle body after installation, an end cup connected with the battery pack and detachably connected with the handle body, and a charging electrode disposed on the battery pack;
wherein the end cap is located at the connection port, and the end cap and the handle body form a complete cylindrical body.

6. The handheld vacuum cleaner according to claim 5, wherein
the end cap is provided with a first connection structure, the handle body is provided with a second connection structure, the end cap is detachably connected to the handle body by an arrangement between the first connection structure and the second connection structure.

7. The handheld vacuum cleaner according to claim 1, wherein
the dust-gas separation unit comprises a dust cup in communication with the suction unit, and a dust cup cover pivotally connected to the dust cup for opening and closing the dust cup;
a push button chute structure is disposed between the dust-gas separation unit and the suction unit, the push button chute structure is configured so that the dust cup is slidably connected to the suction unit in an axial direction of the dust cup, thereby the dust cup cover and the dust cup, and the dust cup and the suction unit are unlocked synchronously.

8. The handheld vacuum cleaner according to claim 1, wherein
a cross-sectional shape of the handle on a plane, which is perpendicular to the axial direction of the handle, is set in an arc racetrack shape, the arc racetrack shape comprises a pair of arc edges and a pair of straight edges which are enclosed to form a closed circle, and the pair of arc edges are symmetrically disposed on opposite sides of the pair of straight edges;
wherein a radius of the arc edge is r, and a length of the straight edge is 1, where r > 1.

9. The handheld vacuum cleaner according to claim 8, wherein
a side wall of the handle is provided with a button and a through hole;
wherein the arc racetrack shape has a long axis and a short axis, the long axis forms a long axis region of the handle, the short axis forms a short axis region of the handle, the key is disposed on one side of the long axis area, and the through hole is located on another side of the long axis area.

10. The handheld vacuum cleaner according to claim 1, wherein
a sum of lengths of the suction unit and the dust-gas separation unit in the axial direction is a length of a body of the handheld vacuum cleaner; wherein a ratio of the length of the body to a length of the handle ranges from 1.4 to 1.6.

11. A handheld vacuum cleaner, comprising:
a dust-gas separation unit comprising a dust cup and a dust cup cover, the dust cup cover being pivotally connected to the dust cup to open and close the dust cup;
a suction unit detachably connected to the dust-gas separation unit, and the suction unit being in communication with the dust cup; and
a handle, the dust-gas separation unit, the suction unit and the handle being disposed forwardly and backwardly along a horizontal direction and being located on a same axis;
wherein the handheld vacuum cleaner is also provided with a push button chute structure, the push button chute structure is configured so that the dust cup is slidably connected to the suction unit in an axial direction of the dust cup, thereby the dust cup cover and the dust cup, and the dust cup and the suction unit are unlocked synchronously.

12. The handheld vacuum cleaner according to claim 11, wherein
an interior of the dust cup is hollow, and the dust cup is open at ends of the dust cup to form a first port and a second port, the dust cup cover is pivotally connected to the first port to open and close the first port;
wherein the suction unit comprises an internally hollow outer shell, and the outer shell is detachably disposed at the second port.

13. The handheld vacuum cleaner according to claim 12, wherein
the push button chute structure comprises a sliding substructure capable of sliding the dust cup along the axial direction of the dust cup, and a hook substructure connecting the dust cup cover and the outer shell.

14. The handheld vacuum cleaner according to claim 13, wherein
the sliding substructure comprises a raised portion formed on an outer circumferential wall of the dust cup and extending along the axial direction of the dust cup, a guide bar formed on the outer shell and extending into the raised portion, and a push button slidably disposed on the guide bar;
wherein the guide bar is provided with a chute extending along the axial direction of the dust cup and engaging with the push button.

15. A handheld vacuum cleaner, comprising a dust-gas separation unit, a suction unit and a handle which are disposed in sequence along an axial direction, the handle being longitudinally disposed along the axial direction, the suction unit being provided with a guide bar extending forwardly and abutting against an outer contour of the dust-gas separation unit, the dust-gas separation unit being provided with a raised portion which is sleeved on the guide bar and adapted to drive the dust-gas separation unit to move longitudinally back and forth along the guide bar, the raised portion covering at least a section of the guide bar along the axial direction.

16. A handheld vacuum cleaner, comprising:
a suction unit adapted to form negative pressure so as to such up dust and gas;
a dust-gas separation unit connected to one end of the suction unit, and the dust-gas separation unit and the suction unit being coaxially disposed;
a handle connected to another end of the suction unit, the handle and the suction unit being coaxially disposed, and an interior of the handle being hollow so as to form a hollow cavity; and
a power supply unit detachably disposed in the hollow cavity of the handle;
wherein after the power supply unit is installed to the handle, a rear end of the power supply unit is exposed to an outside of the handle, and the power supply unit and the handle form a complete cylindrical body.

17. The handheld vacuum cleaner according to claim 16, wherein the power supply unit is detachably disposed in the handle along the axial direction of the handle, the handle comprises an internally hollow handle body, the handle body is provided with a connection port which is configured to put the power supply unit into the handle body or take the power supply unit out from the handle body.

18. The handheld vacuum cleaner according to claim 17, wherein the power supply unit comprises a battery pack located in a hollow cavity of the handle body after installation, an end cup connected with the battery pack and detachably connected with the handle body, and a charging electrode disposed on the battery pack;
wherein the end cap is located at the connection port, and the end cap and the handle body form a complete cylindrical body.

19. The handheld vacuum cleaner according to claim 18, wherein
a side wall of the handle body is provided with a through hole, and the through hole is configured to expose a charging electrode located in the handle body.

20. A handheld vacuum cleaner, comprising a dust-gas separation unit, a suction unit and a handle disposed in sequence along an axial direction, the handle being internally hollow and provided with a power supply unit which can be assembled and disassembled along the axial direction, the power supply unit being provided with a charging electrode for plug-in charging, the handle being provided with a button, and a through hole disposed on opposite sides of the button and extending through the handle inside and outside, the power supply unit being installed into the handle to form an electrical connection with the button, and the charging electrode being exposed to an outside from the through hole.

21. A handheld vacuum cleaner, comprising:
a suction unit adapted to generate negative pressure to suck in dusty air;
a handle connected to the suction unit, the handle and the suction unit being disposed coaxially; and
an air outlet filter unit detachably disposed on an outside of the suction unit along an axial direction of the handle;
wherein the suction unit is provided with an air outlet end, the air outlet filter unit is disposed at the air outlet end, the air outlet filter unit and the suction unit are disposed coaxially, and the air outlet filter unit is configured to filter an air flow discharged through the air outlet end.

22. The handheld vacuum cleaner according to claim 21, wherein the suction unit comprises an internally hollow outer shell, the outer shell is formed with a first cylindrical section and a second cylindrical section located adjacent to the first cylindrical section in an axial direction of the outer shell; wherein an outer diameter of the second cylindrical section is smaller than an outer diameter of the first cylindrical section, and an outer diameter of the handle is smaller than the outer diameter of the second cylindrical section, so that the air outlet filter unit can be sleeved on the second cylindrical section from a handle side and along the axial direction of the handle; and the second cylindrical section is provided with the air outlet end.

23. The handheld vacuum cleaner according to claim 22, wherein a first shoulder is formed at a connection between the first cylindrical section and the second cylindrical section, and a second shoulder is formed at a connection between the second cylindrical section and the handle; wherein a circumferential wall surface of the second cylindrical section is provided with a plurality of first air outlet holes which extend through the circumferential wall surface inside and outside, so as to form the air outlet end capable of radially discharging air; wherein the air outlet filter unit comprises an air outlet HEPA sleeved on the second cylindrical section and a HEPA protective shell covered on an outer periphery of the air outlet HEPA; and wherein the HEPA protective shell is detachably connected with the outer shell to form a circumferential annular space adapted to accommodate the air outlet HEPA.

24. A handheld vacuum cleaner, comprising a dust-gas separation unit, a suction unit and a handle disposed in sequence along an axial direction, a detachable air outlet filter unit being provided on a side of the suction unit adjacent to the handle, the air outlet filter unit is sleeved on an outside of the suction unit through the handle along the axial direction.

25. The handheld vacuum cleaner according to claim 24, wherein the suction unit is formed with a first cylindrical section and a second cylindrical section adjacent to each other in the axial direction, an outer diameter of the second cylindrical section is smaller than an outer diameter of the first cylindrical section, an outer diameter of the handle is smaller than the outer diameter of the second cylindrical section, outer contours of the first cylindrical section, the second cylindrical section and the handle form a stepped step, the air outlet filter unit is sleeved on an outer side of the second cylindrical section, an outer diameter of the air outlet filter unit is equal to the outer diameter of the first cylindrical section, and an axial rear end of the air outlet filter unit is flush with a rear end of the second cylindrical section.

26. A handheld vacuum cleaner, comprising:
a suction unit adapted to generate negative pressure so as to suck in dusty air;
a dust-gas separation unit disposed at one end of the suction unit; and
a handle disposed at another end of the suction unit away from the dust-gas separation unit;
wherein a cross-sectional shape of the handle on a plane, which is perpendicular to an axial direction of the handle, is set in an arc racetrack shape.

27. The handheld vacuum cleaner according to claim 26, wherein
the arc racetrack shape comprises a pair of arc edges and a pair of straight edges which are enclosed to form a closed circle, the pair of arc edges are symmetrically disposed on opposite sides of the pair of straight edges; wherein a radius of the arc edge is r, and a length of the straight edge is 1, where r > 1; wherein a sum of lengths of the suction unit and the dust-gas separation unit in the axial direction is a length of a body of the handheld vacuum cleaner; and wherein a ratio of the length of the body to a length of the handle ranges from 1.4 to 1.6

28. The handheld vacuum cleaner according to claim 26, wherein a side wall of the handle is provided with a button and a through hole; wherein the arc racetrack shape has a long axis and a short axis, the long axis forms a long axis region of the handle, the short axis forms a short axis region of the handle, the key is disposed on one side of the long axis area, and the through hole is located on another side of the long axis area.

29. A handheld vacuum cleaner, comprising a dust-gas separation unit, a suction unit and a handle disposed in sequence along an axial direction, the handle being longitudinally disposed along the axial direction, an outer diameter of the handle being smaller than an outer diameter of the suction unit; wherein when the handle is held in use, a width of the handle in a longitudinal direction is greater than a width of the handle in a transverse direction.

30. The handheld vacuum cleaner according to claim 29, wherein an interior of the handle being hollow so as to form a hollow cavity, a power supply unit is detachably disposed in the hollow cavity of the handle; wherein, a ratio of the length of a body of the handheld vacuum cleaner to a length of the handle ranges from 1.4 to 1.6, and after the power supply unit is installed to the handle, the power supply unit and the handle are capable of forming a complete cylindrical body.
